# EUROPÄISCHE PATENTANMELDUNG

(11) **EP 0 836 982 A2**
(43) Veröffentlichungstag der Anmeldung: **22.04.1998**
(21) Anmeldenummer: 97116764.8
(22) Anmeldetag: 26.09.1997
(51) Int. Cl.: B62D 5/06

(54) **Dämpferventil**

(30) Priorität: 17.10.1996 DE 19642837
(71) Anmelder: Daimler-Benz Aktiengesellschaft, 70546 Stuttgart (DE)
(72) Erfinder: Asbrand, Ulrich, 73630 Remshalden (DE); Cakmaz, Aydogan, 70374 Stuttgart (DE); Class, Jürgen, 75428 Illingen (DE)

(57) **Zusammenfassung**

Die Erfindung betrifft ein Dämpferventil (15) mit in zumindest einer Richtung durchströmbarer Drosselanordnung und dazu parallel wirksamer, in Gegenrichtung öffnender sowie in Offenlage drosselfrei bzw. relativ drosselarm durchströmbarer Rückschlagventilanordnung, welcher eine Offenhaltung zugeordnet ist, durch die ein Schließen der Rückschlagventilanordnung erst bei einem Mindest-Druckgefälle in Schließrichtung zugelassen wird.

## Beschreibung

Die Erfindung betrifft ein Dämpferventil - insbesondere für einen externen Lenkungsdämpfer oder eine hydraulische Servolenkung eines Kraftfahrzeuges, deren als hydrostatisches Motoraggregat bzw. als hydraulisches Verdrängeraggregat ausgebildeter Servomotor auch als Lenkungsdämpfer wirkt, indem Hydraulikleitungen bzw. Hydraulikwege zwischen Servomotor und Servoventil mit Dämpferventilen bestückt sind - mit in zumindest einer Richtung durchströmbarer Drosselanordnung und dazu parallel wirksamer, in Gegenrichtung öffnender sowie in Offenlage drosselfrei bzw. drosselarm durchströmbarer Rückschlagventilanordnung.

Derartige Dämpferventile bzw. damit für die Funktion eines Lenkungsdämpfers bestückte Servolenkungen sind aus der DE 43 23 179 A1 bekannt. Die bekannten Dämpferventile besitzen ein lochscheibenartiges Ventilträgerteil, dessen vom Hydraulikmedium durchsetzte Löcher zum einen Teil mit Ventilfederplättchen und zum anderen Teil durch eine gefederte Ventilplatte steuerbar sind, wobei sowohl die auf der einen Stirnseite der Lochscheibe angeordneten Ventilfederplättchen als auch die auf der anderen Stirnseite der Lochscheibe angeordnete gefederte Ventilplatte am Ventilträgerteil durch Bolzen gehaltert werden. Dabei bilden die durch die Ventilfederplättchen gesteuerten Öffnungen in einer Richtung durchströmbare Drosselstrecken, während die durch die gefederte Ventilplatte gesteuerten Löcher als Rückschlagventilanordnung wirken, die in Gegenrichtung zur vorgenannten Strömungsrichtung drosselarm bzw. drosselfrei geöffnet sind.

Im Falle einer Servolenkung mit einem als Servomotor dienenden doppeltwirkenden Kolben-Zylinder-Aggregat ist jede Seite dieses Aggregates mit je einem Motoranschluß eines Servoventiles verbunden, so daß zwischen den beiden Seiten eine steuerbare Druckdifferenz in der einen und anderen Richtung wirksam werden kann. Zur Gewährleistung der Lenkungsdämpferfunktion sind die Verbindungsleitungen zwischen den beiden Seiten des Kolben-Zylinder-Aggregates und dem Servoventil mit den vorangehend beschriebenen Dämpferventilen bestückt, wobei deren Rückschlagventilanordnungen jeweils bei einer Strömung in das Kolben-Zylinder-Aggregat öffnen.

Externe Lenkungsdämpfer sind typischerweise nach Art doppeltwirkender Kolben-Zylinder-Aggregate ausgebildet, deren Zylinderkammern miteinander über Drosselstrecken kommunizieren, derart, daß bei Kolbenhüben Hydraulikmedium unter Überwindung eines Drosselwiderstandes von der einen Kammer in die andere Kammer überströmt. Auch bei derartigen Lenkungsdämpfern können Dämpferventile der eingangs angegebenen Art eingesetzt werden, wobei zur Gewährleistung einer gleichartigen Dämpferwirkung in beiden Hubrichtungen des Kolbens zwischen den Zylinderkammern zwei in Reihe angeordnete Dämpferventilanordnungen vorgesehen sein müssen, die bezüglich des sie durchsetzenden Hydraulikstromes entgegengesetzt orientiert sind.

Jede Lenkungsdämpferanordnung wirkt gegenüber einer Lenkverstellung der Fahrzeuglenkung als - wenn auch geringer - Stellwiderstand. Dadurch kann eine bei der Fahrt des Kraftfahrzeuges aufgrund entsprechender Lenkkinematik auftretende Rückstellkraft, welche die Lenkung in die Geradeausstellung zu drängen sucht, mehr oder weniger stark beeinträchtigt werden. Deshalb muß bei der Auslegung einer Lenkungsdämpferanordnung bisher ein Kompromiss eingegangen werden, derart, daß einerseits eine hinreichende Dämpferwirkung erreicht und andererseits eine übermäßige Beeinträchtigung der Rückstellneigung der Lenkung bei der Fahrt vermieden wird.

Aufgabe der Erfindung ist es, hier eine wesentliche Verbesserung zu erzielen und insbesondere auf die Lenkung einwirkende starke Stöße besonders wirksam dämpfen zu können.

Diese Aufgabe wird erfindungsgemäß dadurch gelöst, daß bei einem Dämpferventil der eingangs angegebenen Art der Rückschlagventilanordnung eine Offenhaltung zugeordnet ist, welche unwirksam wird, sobald an der Rückschlagventilanordnung ein einen vorgegebenen Schwellwert überschreitendes Druckgefälle in der einen Richtung wirksam ist und/oder die geöffnete Rückschlagventilanordnung von einer eine vorgegebene Schwelle überschreitenden Strömung in der einen Richtung durchsetzt wird.

Die Erfindung beruht auf dem allgemeinen Gedanken, immer einen die Drosselanordnung drosselarm bzw. drosselfrei überbrückenden Bypaß offenzuhalten, solange das Dämpferventil nur von einer schwachen Strömung durchsetzt bzw. nur von einer geringen Druckdifferenz beaufschlagt wird. Bei stärkerer Strömung bzw. größerer Druckdifferenz in der einen Richtung schließt das Rückschlagventil und die Drosselanordnung wird dämpfend wirksam. Bei Druckdifferenzen bzw. Strömungen in der anderen Richtung bleibt das Rückschlagventil immer offen.

Im Falle eines Einsatzes des erfindungsgemäßen Dämpferventiles für eine Lenkungsdämpfung kann dann gewährleistet werden, daß auf die Lenkung einwirkende stoßartige Störkräfte durch hohen Drosselwiderstand der Drosselanordnung wirksam gedämpft werdem, während langsame Lenkbewegungen und insbesondere die bei der Fahrt eines Fahrzeuges aufgrund entsprechender Lenkkinematik auftretende Rückstelltendenz der Lenkung praktisch nicht beeinflußt werden.

Gemäß einer konstruktiv bevorzugten Ausführungsform der Erfindung besitzt das Dämpferventil einen Kolben, welcher auf einer Stirnseite vom Druck auf der einen Seite des Dämpferventiles und auf seiner anderen Stirnseite vom Druck auf der anderen Seite des Dämpferventiles beaufschlagt und von einer Feder in die eine Richtung gespannt wird. Dieser Kolben ist mit dem Schließorgan des Rückschlagventiles derart gekoppelt, daß die vorgenannte Feder das Schließorgan in dessen Offenstellung drängt.

Im übrigen wird hinsichtlich bevorzugter Merkmale der Erfindung auf die Ansprüche sowie die nachfolgende Erläuterung der Zeichnung verwiesen, anhand der besonders bevorzugte Ausführungsformen der Erfindung dargestellt werden.

Dabei zeigt
- Fig. 1: eine schaltplanartig schematisierte Darstellung einer hydraulischen Servolenkung mit erfindungsgemäßen Dämpferventilen zwischen Servomotor und Servoventil,
- Fig. 2: ein Schnittbild einer bevorzugten Ausführungsform des Dämpferventiles, wobei die Rückschlagventilanordnung geöffnet ist,
- Fig. 3: ein der Fig. 2 entsprechendes Schnittbild bei geschlossener Rückschlagventilanordnung, und
- Fig. 4: ein Diagramm, welches die Betriebscharakteristik des erfindungsgemäßen Dämpferventiles zeigt, wobei das in Schließrichtung der Rückschlagventilanordnung am Dämpferventil wirksame Druckgefälle in Abhängigkeit von dem das Dämpferventil durchsetzenden Volumenstrom dargestellt ist.

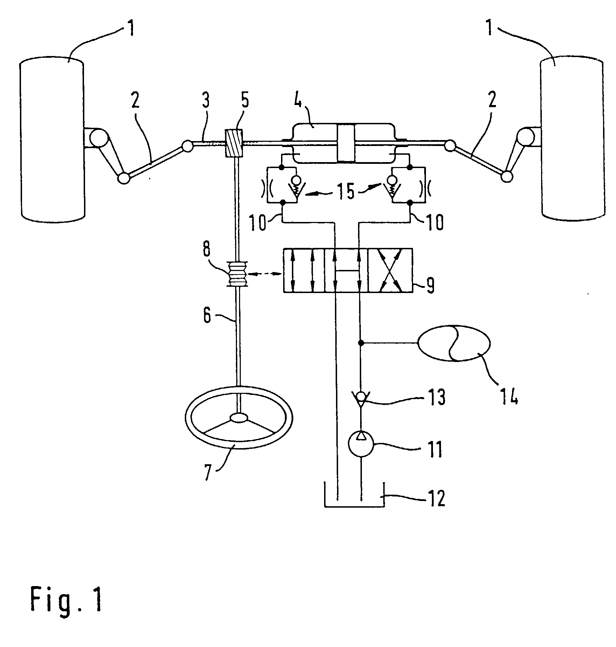

Gemäß Fig. 1 besitzt ein nicht näher dargestelltes Kraftfahrzeug vordere Fahrzeuglenkräder 1, die im dargestellten Beispiel über Spurstangen 2 mit einer Zahnstange 3 verbunden sind, welche gleichachsig in die Kolbenstange eines als Servomotor angeordneten doppeltwirkenden Kolben-Zylinder-Aggregates 4 übergeht bzw. mit der Kolbenstange verbunden ist.

Die Zahnstange kämmt mit einem Ritzel 5, welches über eine Lenksäule 6 mit einem Lenkhandrad 7 antriebsmäßig verbunden ist. In der Lenksäule 6 ist ein drehelastisches Element 8 angeordnet, so daß zwischen Ritzel 5 und Lenkhandrad 7 eine begrenzte Relativdrehung auftreten kann, deren Maß von den zwischen Ritzel 5 und Lenkhandrad 7 übertragenen Kräften und Momenten abhängig ist.

Diese Relativdrehung steuert ein Servoventil 9, welches einerseits über Motorleitungen 10 mit den beiden Kammern des Kolben-Zylinder-Aggregates 4 und andererseits mit der Druckseite einer Hydraulikpumpe 11 sowie einem relativ drucklosen Hydraulikreservoir 12 verbunden ist, an das die Saugseite der Pumpe 11 angeschlossen ist.

In der dargestellten Mittellage des Servoventiles 9 sind die beiden Kammern des Kolben-Zylinder-Aggregates miteinander sowie mit dem Reservoir 12 verbunden. Außerdem kann eine Verbindung zur Druckseite der Pumpe 11 bestehen, welche dann ständig laufen kann.

Statt dessen ist es auch möglich, in der Mittelstellung des Servoventiles 9 den Ventilanschluß zur Druckseite der Pumpe 11 abzusperren, welche in diesem Falle über ein Rückschlagventil 13 einen Druckspeicher 14 laden kann und in Abhängigkeit vom Ladedruck gesteuert bzw. bei hohem Ladedruck ausgeschaltet wird.

Sobald zwischen Ritzel 5 und Lenkhandrad 7 Kräfte bzw. Drehmomente wirksam sind, wird das Servoventil 9 in der einen oder anderen Richtung aus seiner Mittellage verschoben, mit der Folge, daß zwischen den Motorleitungen 12 eine mehr oder weniger große Druckdifferenz in der einen oder anderen Richtung und damit eine mehr oder weniger große Servokraft des Kolben-Zylinder-Aggregates 4 in der einen oder anderen Richtung erzeugt wird und die jeweils am Lenkhandrad 7 für ein Lenkmanöver aufzubringende Kraft entsprechend vermindert.

Erfindungsgemäß übernimmt bei der dargestellten Lenkung das als Servomotor dienende Kolben-Zylinder-Aggregat 4 auch die Funktion eines Lenkungsdämpfers zur Dämpfung von Stößen, die auf die Fahrzeuglenkräder 1 einwirken und eine Lenkwinkeländerung zu bewirken suchen. Zu diesem Zweck sind an den Anschlüssen der Leitung 10 am Servoventil 9 jeweils Dämpferventile 15 angeordnet, welche in weiter unten dargestellter Weise ausgebildet sind. Funktional arbeiten diese Dämpferventile 15 wie eine Drossel, der ein zum Kolben-Zylinder-Aggregat 4 hin öffnendes Rückschlagventil parallel geschaltet ist, welches jedoch seine Schließlage erst dann einnimmt, wenn in Richtung zum Servoventil ein einen Schwellwert überschreitendes Druckgefälle am jeweiligen Dämpferventil 15 wirksam wird. Damit werden stoßartige Bewegungen des Kolbens des Kolben-Zylinder-Aggregates 4 wirksam gedämpft. Langsame Bewegungen des Kolbens, wie sie beispielsweise dann auftreten, wenn sich die Fahrzeuglenkräder während der Fahrt aufgrund der Lenkkinematik selbsttätig zurückstellen, bleiben praktisch unbeeinflußt.

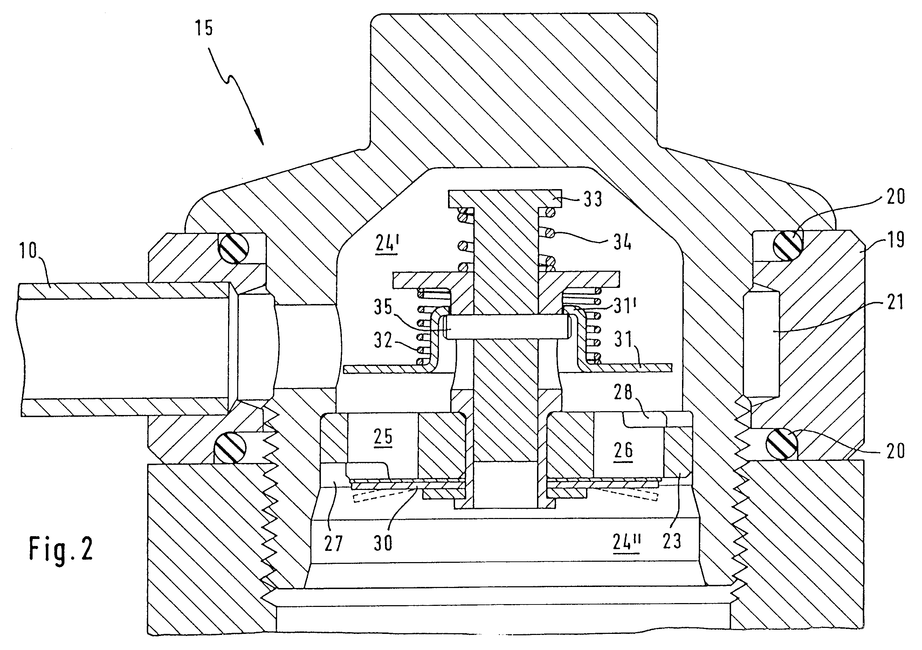

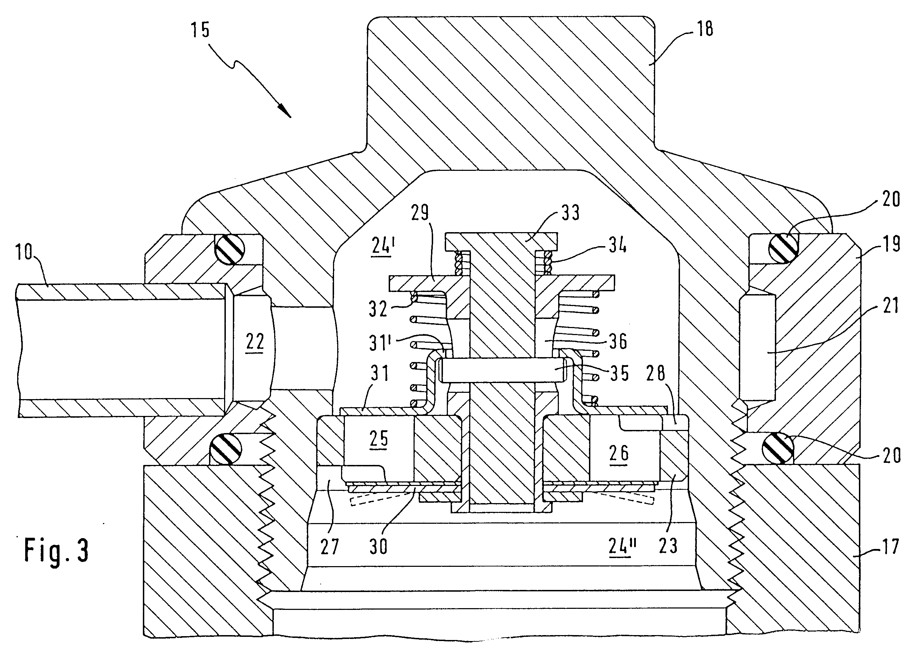

Die Fig. 2 und 3 zeigen nun eine besonders vorteilhafte Ausführungsform für das Dämpferventil 15.

Am Gehäuse des in den Fig. 2 und 3 nicht näher dargestellte Servoventiles 9 (vgl. Fig. 1) ist für jede der in Fig. 1 dargestellten Motorleitungen 10 eine Anschlußöffnung vorhanden, die innerhalb eines Innengewindeteiles 17 gleichachsig zur Gewindeachse angeordnet ist. In das Innengewindeteil 17 läßt sich ein hutförmiges Anschlußteil 18 mit einem an ihm angeordneten Außengewinde eindrehen, wobei zwischen einander gegenüberliegenden Flanschflächen am Innengewindeteil 17 und am Anschlußteil 18 ein mit der Motorleitung 10 fest verbundener Haltering 19 axial einspannbar ist und die Spalte zwischen den Stirnseiten des Halteringes 19 und den zugewandten Flanschflächen des Innengewindeteiles 17 und des Anschlußteiles 18 durch Dichtringe 20 druckfest abgesperrt werden.

Der Haltering 19 besitzt auf seinem Innenumfang einen nach Art einer Ringnut ausgebildeten Kanal 21, welcher einerseits mit der Motorleitung 10 und andererseits mit einer oder mehreren Radialbohrungen 22 im Anschlußteil 18 kommuniziert und damit eine Verbindung zwischen der Motorleitung 10 und dem Innenraum des Anschlußteiles 18 herstellt.

Innerhalb des Anschlußteiles 18 ist ein kreisscheibenförmiges, nach Art einer Lochscheibe ausgebildetes Trägerteil 23 fest und unverlierbar gehaltert, welches innerhalb des Anschlußteiles 18 einen an die Radialbohrung bzw. Radialbohrungen 22 anschließenden Raum 24' von einem an die Anschlußöffnung des Gehäuses 16 anschließenden Raum 24'' abtrennt.

Das Trägerteil 23 besitzt Axialbohrungen 25 und 26, wobei die Axialbohrungen 25 in eine zum Raum 24'' geöffnete Vertiefung 27 auf der unteren Stirnseite des Trägerteiles 23 und die Axialbohrungen 26 in ähnliche Vertiefungen 28 auf der oberen Stirnseite des Trägerteiles 23 münden.

In einer Zentralöffnung des Trägerteiles 23 ist ein hohlzylindriger Bolzen 29 gehaltert, welcher auf der unteren Stirnseite des Trägerteiles 23, d.h. auf dessen dem Gehäuse des Servoventiles 9 zugewandter Seite, kreisscheibenförmige Federplatten 30 haltert und auf der anderen Stirnseite des Trägerteiles 23 als Axialführung für eine Ringscheibe 31 ausgebildet ist.

Die Federplatten 30 sind so bemessen, daß sie die Axialbohrungen 26 des Trägerteiles 23 zumindest weitestgehend überdecken, jedoch größere Bereiche der den Axialbohrungen 25 zugeordneten Vertiefungen 27 frei lassen. Die Ringscheibe 31 ist so bemessen, daß sie die Axialbohrungen 25 abzuschließen vermag, jedoch größere Bereiche der den Axialbohrungen 26 zugeordneten Vertiefungen 28 frei läßt.

Die Ringscheibe 31 besitzt an ihrem inneren Umfangsrand einen hülsenförmigen Fortsatz mit einem zum Umfang des Bolzens 29 hin abgewinkelten stirnseitigen Flansch 31', welcher den Bolzen 29 mit geringem radialen Spiel umfaßt. Zwischen der Ringscheibe 31 und einem am freien Ende des Bolzens 29 angeordneten Flansch ist eine Schraubendruckfeder 32 eingespannt. die die Ringscheibe 31 gegen die zugewandte Stirnseite des Trägerteiles 23 spannt.

Innerhalb der den hohlzylindrigen Bolzen 29 axial durchsetzenden Längsbohrung ist ein plungerartiger Kolben 33 axial verschiebbar eingesetzt, welcher die genannte Längsbohrung des Bolzens 29 dicht bzw. weitestgehend dicht abschließt. An seinem in den Fig. 2 und 3 oberen Ende besitzt der Kolben 33 einen radial nach außen ragenden Ringflansch, welcher ein kolbenseitiges Widerlager einer Schraubendruckfeder 34 bildet, deren anderes Widerlager durch die zugewandte Stirnseite des Bolzens 29 gebildet wird.

Im Kolben 33 ist ein Querstift 35 fest gehaltert, welcher durch Radialöffnungen 36 im Bolzen 29 hindurchragt. Diese Radialöffnungen 36 sind als Langlöcher ausgebildet, deren längere Achse parallel zur Achse des Bolzens 29 ausgerichtet ist.

Die freien Enden des Querstiftes 35 untergreifen den Flansch 31' der Ringscheibe 31, so daß die Ringscheibe 31 bei einem Aufwärtshub des Kolbens 33 vom Trägerteil 23 abgehoben bzw. in einer vom Trägerteil 23 abgehobenen Stellung gehalten wird, wenn der Querstift 35 zusammen mit dem Kolben 33 die in Fig. 2 dargestellte obere Lage einnimmt. Die Radialöffnungen 36 erstrecken sich hinreichend weit in Abwärtsrichtung, derart, daß die Ringscheibe 31 gemäß Fig. 3 eine auf dem Träger teil 23 aufliegende Lage erreichen kann, bevor der Querstift 35 durch die Ränder der Radialöffnungen 36 an einer weiteren Abwärtsbewegung zusammen mit dem Kolben 33 gehindert wird.

Die Schraubendruckfeder 34 besitzt eine stärkere Federspannung als die Schraubendruckfeder 32, derart, daß bei Abwesenheit äußerer Kräfte der in Fig. 2 dargestellte Zustand vorliegt, d.h. die Schraubendruckfeder 34 hält den Kolben 33 in seiner durch den Querstifte 35 und die Radialöffnungen 36 vorgegebenen oberen Endlage, in der die Ringscheibe 31 vom Trägerteil 23 abgehoben ist.

Sobald an den Stirnseiten des Kolbens 33 ein hinreichendes Druckgefälle in Abwärtsrichtung des Kolbens 33 wirksam wird, wird der Kolben 33 nach unten geschoben, so daß die Schraubendruckfeder 32 die Ringscheibe 31 zur Anlage auf der zugewandten Stirnseite des Trägerteiles 23 bringen kann.

Das dargestellte Dämpferventil funktioniert wie folgt:

Die Ringscheibe 31 bleibt in ihrer in Fig. 2 dargestellten, vom Trägerteil 23 entfernten Lage, solange der Druck im Raum 24'' größer, gleich groß oder nur geringfügig kleiner als der Druck im Raum 24' ist. Dies ist gleichbedeutend damit, daß durch die Axialbohrungen 25 immer eine prinzipiell beliebig starke Strömung vom Raum 24'' zum Raum 24' möglich ist. Diese Strömung kann weitestgehend drosselfrei bzw. drosselarm erfolgen. Darüber hinaus ist auch eine schwächere Strömung in umgekehrter Richtung drosselfrei bzw. drosselarm möglich, solange das diese Strömung erzeugende Druckgefälle zwischen den Räumen 24' und 24'' so gering bleibt, daß der Kolben 33 von der Schraubendruckfeder 34 noch in der Lage der Fig. 2 gehalten werden kann.

Dies führt dazu, daß der Kolben des Kolben-Zylinder-Aggregates 4 in Fig. 1 bei langsamen Bewegungen hydraulisch durch die Dämpferventile 15 praktisch nicht gedämpft wird. Denn die mit langsamen Bewegungen des Kolbens des Kolben-Zylinder-Aggregates 4 einhergehenden Strömungen an den Dämpferventilen 15 reichen nicht aus, an einem der Dämpferventile 15 ein Druckgefälle vom Raum 24' zum Raum 24'' hin zu erzeugen, welches eine zur Verschiebung des Kolbens 33 in Abwärtsrichtung ausreichende Größe erreichen könnte.

Somit wird die beim Fahrbetrieb aufgrund der Lenkkinematik erreichte Rückstelltendenz der Fahrzeuglenkung durch die Dämpferventile 15 nicht behindert.

Sobald auf die Fahrzeuglenkräder 1 Störkräfte wirken, die zu einer stoßartigen Bewegung des Kolbens des Kolben-Zylinder-Aggregates 4 führen, wird über eine der Motorleitungen 10 Hydraulikmedium zum Servoventil 9 hin stoßartig ausgeschoben, mit der Folge, daß in dem dieser Motorleitung 10 zugeordneten Dämpferventil 15 innerhalb des Raumes 24' ein deutlicher Überdruck relativ zum Druck im Raum 24'' auftritt und der Kolben 33 in den Bolzen 29 eingeschoben (in Fig. 2 nach abwärts) wird. Damit wird gleichzeitig die Ringscheibe 31 von ihrer Schraubendruckfeder 32 gegen das Trägerteil 23 gedrängt, so daß die mit der Ringscheibe 31 nach Art eines Rückschlagventiles zusammenwirkenden Axialbohrungen 25 des Trägerteiles 23 geschlossen werden und das Hydraulikmedium nur noch über die Bohrungen 26 vom Raum 24' in den Raum 24'' strömen kann, wobei die Federplatten 30 eine Drosselung des Hydraulikstromes und damit eine Dämpfung der Bewegung des Kolbens des Kolben-Zylinder-Aggregates 4 bewirken.

Gemäß einer bevorzugten Ausführungsform kann die Schraubendruckfeder 32 aus einer Formgedächtnislegierung bestehen, welche deutlich temperaturabhängige Eigenschaften aufweist, derart, daß die Schraubendruckfeder 32 oberhalb einer Sprungtemperatur ihre normale Federspannung und unterhalb der Sprungtemperatur eine verschwindende oder sehr geringe Federspannung aufweist. Damit kann die Schraubendruckfeder 32 unterhalb der Sprungtemperatur keine oder nur eine äußerst geringe Kraft erzeugen, die die Ringscheibe 31 unter Mitnahme des Kolbens 33 gegen die Kraft der Schraubendruckfeder 34 in Abwärtsrichtung zu drängen sucht. Dies ist gleichbedeutend damit, daß der Kolben 33 erst dann gegen die Kraft der Feder 34 niedergedrückt werden kann, wenn zwischen den Räumen 24' und 24'' ein vergrößertes Druckgefälle vorliegt.

Auf diese Weise können temperaturabhängige Viskositätsänderungen des Hydraulikmediums zumindest teilweise kompensiert werden:

Wenn das Hydraulikmedium bei sehr tiefen Temperaturen, d.h. unterhalb der Sprungtemperatur der Feder 32, zunehmend zähflüssiger wird, so tritt gegenüber den Verhältnissen bei höheren Temperaturen bei gleichen Volumenströmen vom Raum 24' in den Raum 24'' durch die Bohrungen 25 eine vergrößerte Druckdifferenz zwischen den Räumen 24' und 24'' auf. Durch die Feder 32 aus Formgedächtnislegierung kann also erreicht werden, daß bei tiefen Temperaturen ein ähnlich großer Volumenstrom vom Raum 24' in den Raum 24'' wie bei höheren Temperaturen auftreten muß, um den Kolben 33 in Abwärtsrichtung zu bewegen.

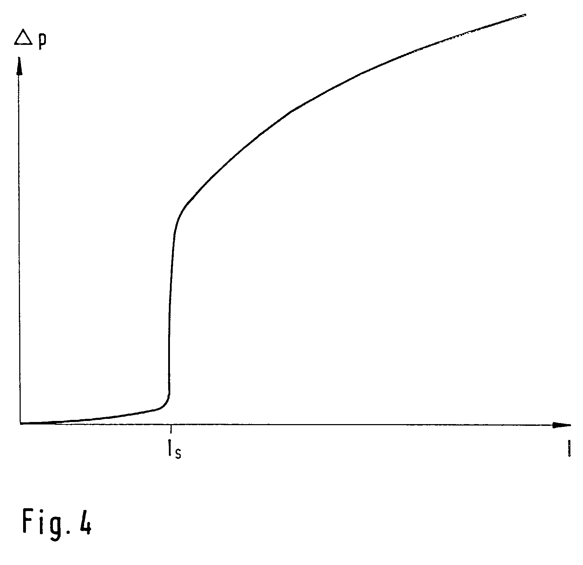

Die Fig. 4 veranschaulicht das Verhalten des erfindungsgemäßen Dämpferventiles. Dabei ist bei dem dargestellten Diagramm auf der Abszisse der Volumenstrom I des Hydraulikmediums vom Raum 24' zum Raum 24'' aufgetragen. Die Ordinate zeigt das jeweils zugehörige Druckgefälle Δp zwischen dem Raum 24' und dem Raum 24''. Unterhalb eines Schwellwertes Iₛ des Volumenstromes kann nur ein geringes Druckgefälle Δp auftreten, da die Ringscheibe 31 ihre vom Trägerteil 23 abgehobene Lage einnimmt. In der Umgebung des Schwellwertes Iₛ des Volumenstromes wird dann ein hinreichendes Druckgefälle Δp erreicht, um den Kolben 33 niederzudrücken und damit die Ringscheibe 31 zur Anlage auf dem Trägerteil 23 zu bringen. Damit werden die Bohrungen 25 abgesperrt, mit der Folge, daß bei einem weiteren Anstieg des Volumenstromes nur noch eine Strömung durch die Axialbohrungen 26 möglich ist und von den Federplatten 33 ein stark erhöhter Drosselwiderstand gegen den Volumenstrom bewirkt wird. Dementsprechend steigt das Druckgefälle bei Erhöhung des Volumenstromes über den Schwellwert Iₛ hinaus steil an.

## Patentansprüche

1. Dämpferventil - insbesondere für einen externen Lenkungsdämpfer oder eine hydraulische Servolenkung eines Kraftfahrzeuges, deren als hydrostatisches Motoraggregat bzw. als hydraulisches Verdrängeraggregat ausgebildeter Servomotor auch als Lenkungsdämpfer wirkt, indem Hydraulikleitungen bzw. Hydraulikwege zwischen Servomotor und Servoventil mit Dämpferventilen bestückt sind - mit in zumindest einer Richtung durchströmbarer Drosselanordnung und dazu parallel wirksamer, in Gegenrichtung öffnender sowie in Offenlage drosselfrei bzw. drosselarm durchströmbarer Rückschlagventilanordnung,
**dadurch gekennzeichnet**,
daß der Rückschlagventilanordnung (23,25,31,32) eine Offenhaltung (33,34,35) zugeordnet ist, welche unwirksam wird, sobald an der Rückschlagventilanordnung ein einen vorgegebenen Schwellwert überschreitendes Druckgefälle (Δp) in der einen Richtung (von 24' nach 24'') wirksam ist und/oder die geöffnete Rückschlagventilanordnung von einer eine vorgegebene Schwelle (Iₛ) überschreitenden Strömung in der genannten einen Richtung durchsetzt wird.

2. Dämpferventil nach Anspruch 1,
**dadurch gekennzeichnet**,
daß ein in zueinander entgegengesetzten Richtungen verschiebbares Stellorgan (33) auf einer in die eine Richtung weisenden Fläche vom Druck auf der einen Seite (24') des Dämpferventiles und auf einer in die andere Richtung weisenden Fläche vom Druck auf der anderen Seite (24'') des Dämpferventiles beaufschlagbar und mittels Federkraft entgegen dem genannten Druckgefälle beaufschlagt ist, und daß dieses Stellorgan mit einem Schließkörper (31) des Rückschlagventiles (31,32,33) gekoppelt ist.

3. Dämpferventil nach Anspruch 1 oder 2,
**dadurch gekennzeichnet**,
daß das Stellorgan als Kolben (33) ausgebildet ist.

4. Dämpferventil nach einem der Ansprüche 1 bis 3,
**dadurch gekennzeichnet**,
daß alle Ventilelemente an einem lochscheibenartigen Trägerteil (23) angeordnet sind, wobei erste Axialbohrungen (25) durch eine auf der einen Stirnseite des Trägerteiles angeordnete gefederte Ringscheibe (31) steuerbar und andere Axialbohrungen (26) durch auf der anderen Stirnseite des Trägerteiles (23) angeordnete Federplättchen steuerbar sind.

5. Dämpferventil nach einem der Ansprüche 1 bis 4,
**dadurch gekennzeichnet**,
daß die Offenhaltung in ihrer Öffnungsrichtung durch eine temperaturabhängig arbeitende Federanordnung (32,34) beaufschlagt ist, deren Kraft bei geringer Temperatur zunimmt.

6. Dämpferventil nach Anspruch 5,
**dadurch gekennzeichnet**,
daß die Offenhaltung durch eine temperaturunabhängig arbeitende Feder (34) in Öffnungsrichtung und die Rückschlagventilanordnung durch eine temperaturabhängig arbeitende Feder (32) in Schließrichtung beaufschlagt ist, wobei die in Schließrichtung wirkende Federkraft unterhalb einer Sprungtemperatur absinkt.
